(19) Europäisches Patentamt
European Patent Office
Office européen des brevets

(11) Publication number: **0 454 165 A2**

(12) **EUROPEAN PATENT APPLICATION**

(21) Application number: **91106851.8**

(22) Date of filing: **26.04.91**

(51) Int. Cl.[5]: **C08G 65/40**, C08G 61/12, G02B 1/04, G02B 6/16

(30) Priority: **27.04.90 JP 112511/90**

(43) Date of publication of application: **30.10.91 Bulletin 91/44**

(84) Designated Contracting States: **DE FR GB IT NL**

(71) Applicant: **HITACHI, LTD.**
**6, Kanda Surugadai 4-chome**
**Chiyoda-ku, Tokyo 101(JP)**

(72) Inventor: **Takezawa, Yoshitaka**
**Yuuhou-ryo 212, 20-3, Ayukawa-cho 6-chome**
**Hitachi-shi, Ibaraki 316(JP)**
Inventor: **Ohara, Shuichi**
**7-12, Hidaka-cho 2-chome**
**Hitachi-shi, Ibaraki 319-14(JP)**
Inventor: **Tanno, Seikich**
**1415-24, Ishinazaka-cho**
**Hitachi-shi, Ibaraki 319-12(JP)**
Inventor: **Taketani, Noriaki**
**2040-3, Takaba**
**Katsuta-shi, Ibaraki 312(JP)**
Inventor: **Shimura, Masato**
**Izumigamori-ryo, 20-1, Mizuki-cho 2-chome**
**Hitachi-shi, Ibaraki 316(JP)**

(74) Representative: **Patentanwälte Beetz sen. - Beetz jun. Timpe - Siegfried - Schmitt-Fumian- Mayr**
**Steinsdorfstrasse 10**
**W-8000 München 22(DE)**

(54) **New polymers, optical transmitting systems and optical members and their use.**

(57) The invention relates to amorphous organic polymers satisfying the equations I and II:

$$(\rho/M)'(9.1 \times 10^{-5} \cdot n_{CH} + 9.1 \times 10^{-4} \cdot n_{NH} + 1.5 \times 10^{-3} \cdot n_{OH}) < 5.3 \times 10^{-6} \quad (I),$$

$$(\rho/M)(n_C + n_O + 3 \cdot n_S) < 2.6 \times 10^{-2} \quad (II),$$

wherein are:

- $\rho$ the polymer density (g/cm$^3$),
- M the molecular weight of the repeating units (g/mol),
- $n_{CH}$ the number of C-H bonds in the repeating units,
- $n_{NH}$ the number of N-H bonds in the repeating units,
- $n_{OH}$ the number of O-H bonds in the repeating units,
- $n_C$ the total number of benzene rings in the repeating units,
- $n_O$ the number of benzene rings adjacent to a carbonyl group in the repeating units,

and

- $n_S$ the number of benzene rings adjacent to a sulfur atom in the repeating units.

The fluorine content being < 40 % by weight, and the deuterium substitution degree being ≦ 40 %. The invention further provides optical members such as lenses and waveguide structures, and particularly optical transmitting systems, comprising an optical transmitting portion made of these polymers. The invention also relates to the application of these polymers, optical members, waveguide structures and transmitting systems, particularly for engine control systems. The invention permits to realize optical transmission distances more than ten times longer (100m) than with conventional systems.

EP 0 454 165 A2

The present invention relates to heat resistant organic polymers having superior transparency, and optical members, optical waveguide structures and optical transmitting systems using these polymers, and their use, particularly for vehicle and engine control systems.

Transparent organic polymers such as acrylic resins (simply called polymer hereinafter) are superior in flexibility, and are well known as substitutes for inorganic glass in order to reduce cost and weight of optical transmitting systems. However, in cases of using such optical transmitting systems, e.g. for office automation (OA) or for automobiles, deformation stability at high temperatures such as one hundred and several tens degrees and stability of the optical transmission (transparency) without deterioration are required, and these conditions are severer than the transparency and deformation resistance required for general purpose organic polymers.

Hitherto, polymethylmethacrylate (PMMA) and polystyrene have been used as materials for substrates composing optical transmitting systems and particularly for the core of the optical transmitting portion (plastic optical fiber) which must have superior transparency, however, as the thermal deformation temperature of the polymers described above is around 100 °C and the heat resistance of corresponding optical fibers is about 80 °C, the use of these polymers has been restricted naturally because of these properties.

In order to improve the respective polymer properties diethylene glycol bis(allylcarbonate) (CR-39) having a thermal deformation temperature of 140 °C as disclosed in JP-A-62-25706, and bisphenol-A type polycarbonates (PC) having a thermal deformation temperature of 130 °C as disclosed in JP-A-57-46204, etc. have been proposed as materials for the core of optical waveguides.

Further, a method for improving the heat resistance by using cross-linked acrylic polymers is disclosed in JP-A-57-45502.

The prior art described above has the problem that after using for 1000 hours at 125 °C, which was the standard heat resistance temperature of electronic members, the core of the optical transmitting portion has lost its light transmission on account of deterioration and a strong coloration of the core material. The coloration is mainly due to a thermal oxidation of the polymers. To reduce the coloration, a method to add various stabilizers etc. to the polymers was adopted, but the thermal oxidation deterioration could not be prevented substantially, and thus, optical transmitting systems on the basis of polymers comprising stabilizers are not suited for continous long term operation with high reliability.

Moreover, as the stabilizers are main causes of the incremental attenuation loss of such optical fibers, the added quantity of stabilizer should be as small as possible, and hence, no sufficient stabilization effect can be achieved therewith. Another problem is that the core materials on the basis of cross-linked polymers are poor in productivity.

Thus, according to the prior art, an improvement of the heat resistance without increasing the attenuation loss by introducing heat resisting structures such as benzene rings, etc., which have a large light absorption into the molecular structure and by addition of the stabilizers could not be achieved, and furthermore, the transparency was reduced which on the other hand, is a prerequisite for optical polymers for optical transmitting systems.

Accordingly, the substitution of hydrogen in the molecule with deuterium or fluorine in order to improve the transparency of the polymers has been considered. But there are problems such as that the deuterium substituted polymers have increased moisture absorption, and the fluorine substituted polymers have a lower refractive index, so that the selection of cladding materials becomes difficult.

It is the object of the present invention to provide polymers having superior transparency and heat resistance for optical use, and optical members, waveguide structures and optical transmitting systems using these polymers, particularly for information transmission and control systems.

The above object is achieved according to the claims. The dependent claims relate to preferred embodiments.

The attenuation loss $\alpha$ of a plastic optical fiber may be given by equation IV

$$\alpha = \alpha_V + \alpha_E + \alpha_R + \alpha_i \qquad \text{(IV)},$$

wherein

| | |
|---|---|
| $\alpha_V$ | is the absorption loss due to higher harmonics of molecular vibration, |
| $\alpha_E$ | is the electronic transition absorption, |
| $\alpha_R$ | is the Rayleigh scattering loss, |
| $\alpha_V$, $\alpha_E$ and $\alpha_R$ | being intrinsic losses of the material, |

and

$\alpha_i$ is an extrinsic loss caused by the manufacturing process.

$\alpha_i$ can be reduced to a negligibly small value by finding out the optimum conditions of the manufacturing process, but the intrinsic loss of the material cannot be reduced further. Therefore, how to reduce the intrinsic loss of $\alpha_V$, $\alpha_E$, $\alpha_R$ becomes an issue.

The attenuation loss of a plastic optical fiber of cross-linked PMMA made by the cast molding method is separated into the factors described above and shown in Figure 7.

When $\alpha_i$ is reduced to an ultimate, small value, the control factor of the attenuation loss in the visible light region (400 ~ 700 nm) is found to be $\alpha_V$, $\alpha_E > \alpha_R$.

For achieving an issue, the reduction of $\alpha_V$ and $\alpha_E$ of polymers to be used in optical transmitting systems has been studied, and the equations I and II have been found, representing relations between the chemical structure of polymers and $\alpha_V$, $\alpha_E$ in the visible light region.

The maximum value of each equation is normalized by commercial plastic optical fibers made of PMMA and PC, and the smaller the value of the left side of the equations is, the more superior is the transparency of the polymer. Therefore, the smaller the value of the left side of the equations I and II for each polymer is, the more preferable.

The synthetic organic homopolymers and copolymers of the present invention, which preferably are in amorphous form, satisfy the equations I and II:

$$(\rho/M)'(9.1 \times 10^{-5} \cdot n_{CH} + 9.1 \times 10^{-4} \cdot n_{NH} + 1.5 \times 10^{-3} \cdot n_{OH}) < 5.3 \times 10^{-6} \quad \text{(I)},$$

wherein are:

$\rho$ the density ($g/cm^3$) of the homopolymer, or, in the case of a copolymer, the density of a corresponding homopolymer consisting of the respective comonomer units,

M the molecular weight of the repeating units (g/mol),

$n_{CH}$ the number of C-H bonds in the repeating units,

$n_{NH}$ the number of N-H bonds in the repeating units, and

$n_{OH}$ the number of O-H bonds in the repeating units, and

$$(\rho/M)(n_C + n_O + 3 \cdot n_S) < 2.6 \times 10^{-2} \quad \text{(II)},$$

wherein are:

$\rho$ and M the same as above in equation I,

$n_C$ the total number of benzene rings in the repeating units,

$n_O$ the number of benzene rings adjacent to a carbonyl group in the repeating units,

and

$n_S$ the number of benzene rings adjacent to a sulfur atom in the repeating units.

The glass transition temperature (Tg) of the polymers is preferably equal to or higher than 130 °C.

In accordance with another preferred embodiment, the polymers consist of or comprise repeating units of the general formula III,

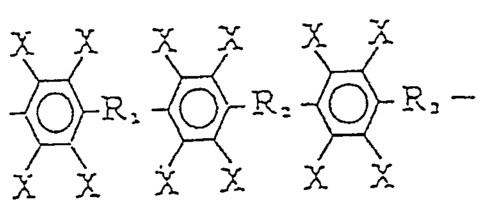

(III),

wherein are:

$R_1$, $R_2$ and $R_3$, independently from each other,

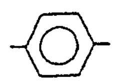, $-O-$, 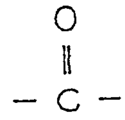,

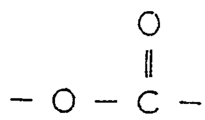 or 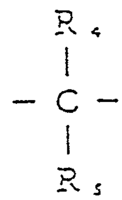,

wherein $R_4$ and $R_5$ independently are an eventually halogenated methyl or phenyl group, H or F,

and

X H, F or Cl.

The polymers according to the invention preferably have a deuterium substitution degree of at most 40 % and/or a fluorine content of less than 40 % by weight.

The deuterium substitution degree is the ratio of the total number of deuterium atoms to the total number of hydrogen atoms present in a corresponding unsubstituted repeating unit of the polymer, expressed in percent.

The fluorine content of fluorinated polymers influences, inter alia, the glass transition temperature. If, as an example, more than 50 % of the C-H bonds of the ester groups of a fluoroalkyl methacrylate are replaced with C-F bonds, the glass transition temperature (Tg) of the polymer goes down below room temperature, and the polymer becomes gummy, which is not preferable for waveguide applications such as optical fibers, etc., and for optical members. In accordance therewith, the fluorine content should, as a general rule, be less than 40 % by weight for these applications.

According to other preferred embodiments, the attenuation loss is at most 0.4 dB/m at a wavelength of 780 nm.

The optical members of this invention, which are particularly optical lenses, optical fibers or other waveguide structures, consist of or comprise a polymer as defined hereinabove.

Optical waveguide structures according to the present invention, particularly optical fibers, comprise a core or a core portion consisting of or comprising a polymer as hereinabove defined and a clad or clad portion having a refractive index lower than that of the core portion.

The optical transmitting systems of the present invention comprise one or more light sources, one or more optical detecting portions and an optical transmitting portion connecting the light source(s) with the optical detecting portion(s); they are characterized in that the optical transmitting portion consists of or comprises a polymer according to the invention, or an optical member or an optical waveguide structure as defined above.

The present invention further relates to the use of the polymers defined above and of the optical members, waveguide structures and the optical transmitting system according to the invention for unidirectional and bidirectional image, power and/or information transmission, particularly in optical systems, data processing systems and open-loop and closed-loop control systems, particularly for short range optical transmission systems, such as linear adaptive networks, and particularly for controlling internal combustion engines and automotive vehicles.

In accordance with a preferred embodiment, the control system for internal combustion engines, particularly for controlling the ignition timing and/or the fuel metering, particularly the fuel injection amount, and/or the air/fuel ratio by means of a microcomputer, comprises

a pulse disc connected with the crank shaft or a cam shaft of the engine,

an index scale installed in a position facing the pulse disc,

a light emitting element and a light receiving element installed in a position facing each other with the pulse

disc and the index scale therebetween,

wherein the pulse disc and the index scale comprise openings, preferably lattice shaped slits, for passing light therethrough, for detecting the crank angle of the engine by detecting the light pulses received by the light receiving element on rotation of the pulse disc in synchronism with that of the engine from the light emitting element,

and means or actuators, particularly for operating ignition coils, fuel metering devices such as carburators or fuel injectors, air and/or fuel bypass valves, exhaust gas recirculation valves, etc.,

wherein the microcomputer operates the actuators,

it is characterized in that the light emitting element and the light receiving element consist of or comprise a polymer or an optical member or a waveguide structure or an optical transmitting system, as defined hereinabove.

The gist of the present invention resides in the specific selection of polymers having high thermal stability and low attenuation.

The determination of the values of $n_O$ and $n_S$ is based on the number of carbonyl groups and sulfur atoms. For instance, when a benzene ring is present between two carbonyl groups, $n_O$ is 2. The same applies for the case of sulfur atoms. Concrete examples are explained in the following embodiment.

By using polymers which satisfy both equations I and II for the optical transmitting portion of optical transmitting systems a small optical absorption and superiority in transparency can be achieved.

Each combination of $n_{CH}$, $n_{NH}$, and $n_{OH}$ in the repeating units of the polymers of the present invention relates to $\alpha_V$ (higher harmonics absorption loss of molecular vibration), and the attenuation loss becomes less when each of these values is as small as possible, However, a reduction of each of $n_{CH}$, $n_{NH}$, and $n_{OH}$, which are essential combinations for organic compounds, to zero is substantially impossible. Therefore, an optimization thereof in the repeating units of the polymer is performed so as to satisfy the equation I.

If a structure having a benzene ring which enhances the rigidness of the high polymer chain is introduced into the repeating unit of the polymer in order to improve the heat resistance, it is to be considered that the benzene ring relates to $\alpha_E$ (absorption loss of electronic transition), and the attenuation loss becomes less, similarly to $\alpha_V$,when the number of benzene rings in the repeating unit is as small as possible. However, the strength of the absorption varies depending on the adjacent group. The strength of the absorption is largest when the adjacent group is a sulfide bond (-S-), or a sulfone bond (-$SO_2$-), and the next largest strength results in the case of a carbonyl bond ( >C=O). Ether bonds (-O-) and methylene bonds (-$CH_2$-) result in smaller values than in the cases described above, but the former decreases the glass transition temperature of the polymer, and the latter involves the tendency to increase $\alpha_V$ described above.

Further, when adjacent benzene rings exist in the repeating unit, the polymer easy undergoes crystallization. Therefore, an optimization of the groups is performed so as to satisfy equation II.

As for the repeating unit of the polymer which satisfies both equations I and II, a unit having a structure shown in the formula III below is preferable, and the number of benzene rings is preferably 1 to 6.

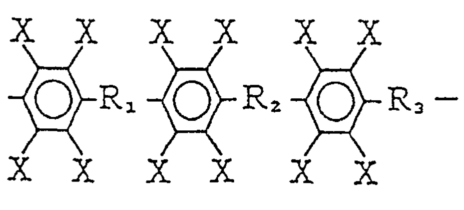

(III) ,

wherein $R_1$, $R_2$ and $R_3$ indicate one of the groups

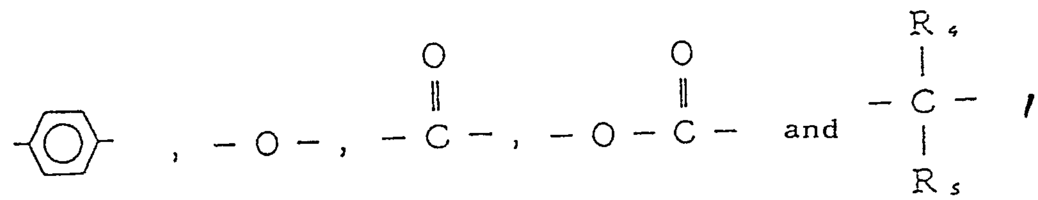

, , , and ,

$R_4$ and $R_5$ independently indicating a methyl group, a phenyl group or a corresponding halogenated group, H or F and

X indicates F, Cl, or hydrogen.

Additionally, the groups in the repeating unit are not restricted to those of formula III. A reduction of crystallization tendency of the polymer is achieved by introducing a group such as $-CF_3-$, $-CCl_3-$, etc., into at least one of the X positions in formula III. A group containing silicon (Si) may be comprised in the main chain or the side chain.

Examples for polymers having the structure described above are polymers consisting of or comprising polyether etherketone groups (PEEK), polyetherketone groups (PEK), polyallylate groups and/or polyimide groups. By introducing one or two trifluoromethyl groups as substituents of benzene rings in the repeating units of the polymer, the crystallization tendency is significantly reduced, and the transparency is further improved.

Generally speaking, a polymer in amorphous form in the sense of the present claims and description is a polymer which may contain a crystalline phase to some extent, wherein a content of crystalline phase of less than 5 % is preferred.

Examples for polymers having another structure are polymers comprising or consisting of aromatic polyester groups, such as polyethylene terephthalate (PET), polybutylene terephthalate (PBT), etc. Polymers comprising conventional aromatic polyester groups often show a crystallization tendency, but by introducing one or two trifluoromethyl groups as substituents of benzene rings, the crystallization tendency is reduced, and a superior transparency is achieved.

Examples for repeating units of polymers of the present invention are the following structures:

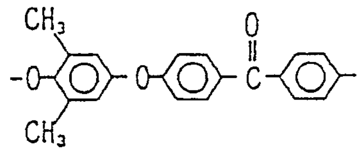,
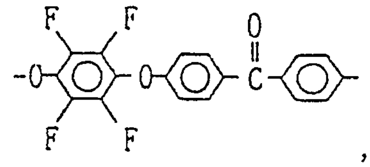,

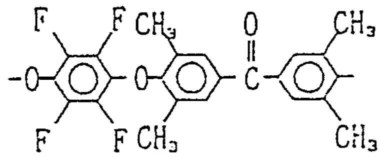,
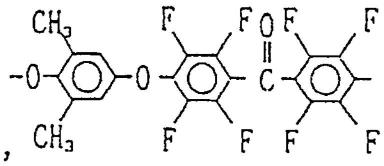,

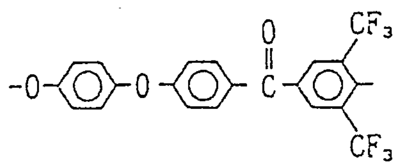,
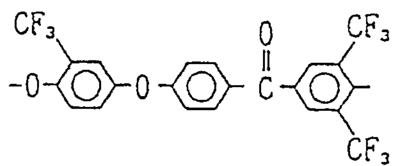,

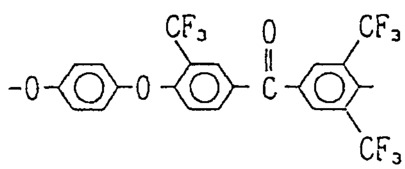,
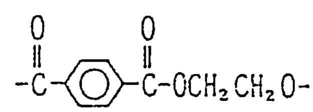,

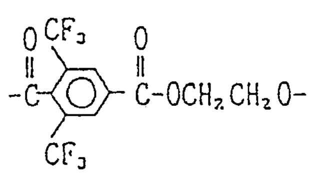,

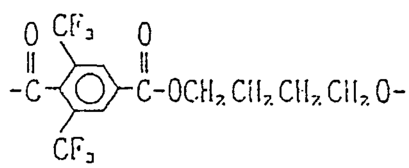,

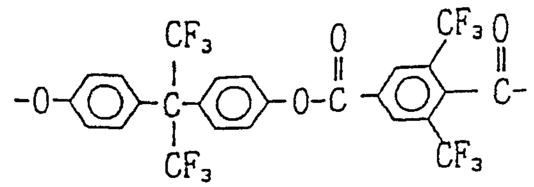

,

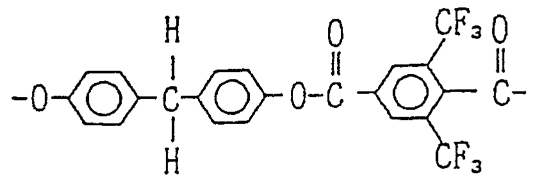

,

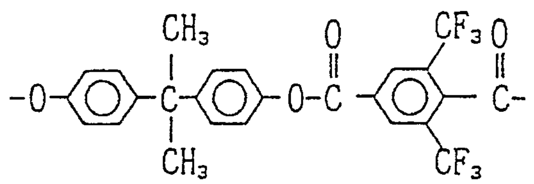

,

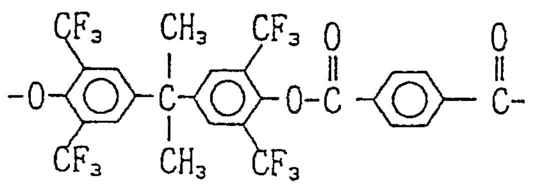

,

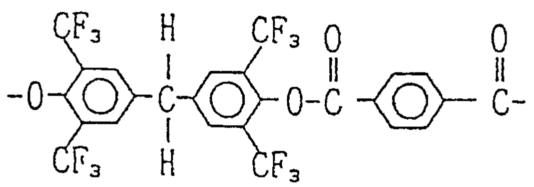

,

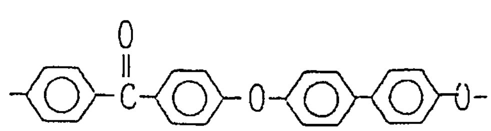

,

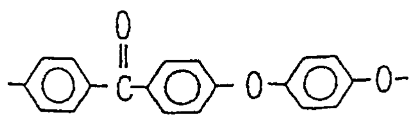

,

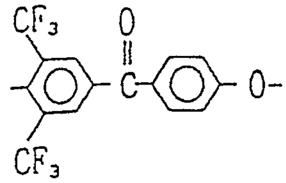

,

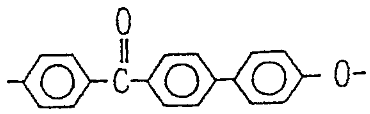

,

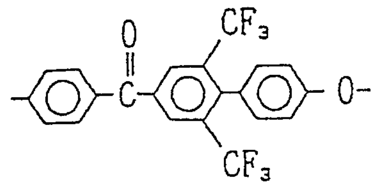

,

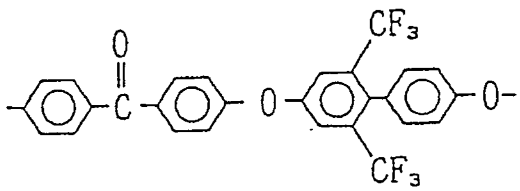

,

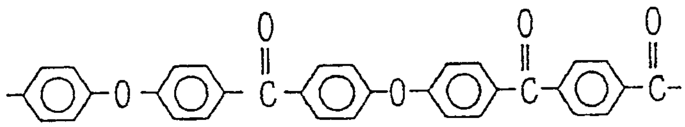

,

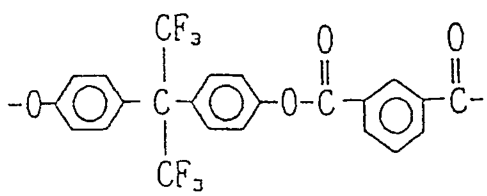

,

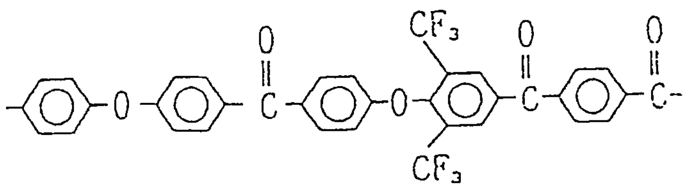

,

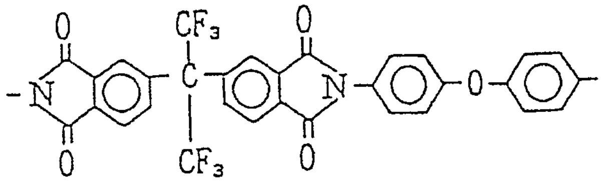

,

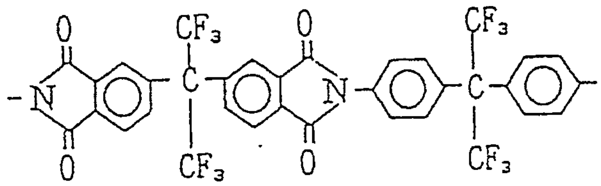

,

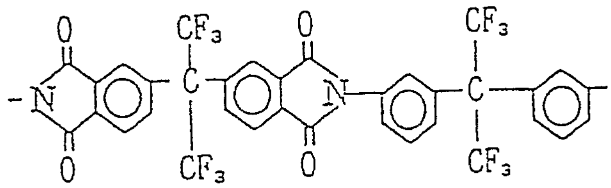

,

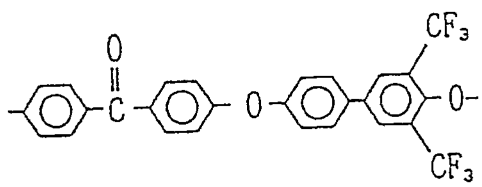

,

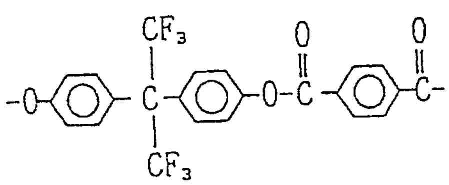

,

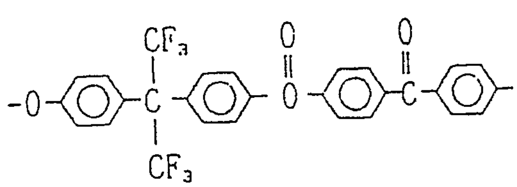

,

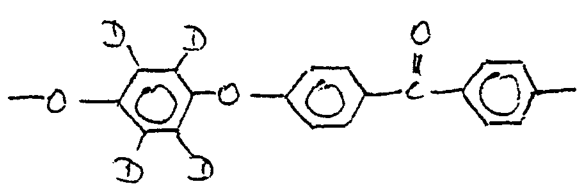

.

According to the concept of the present invention, also copolymers can be used. For instance, polysulfone-allylate block copolymers, polysulfone-polycarbonate block copolymers, etc., can be mentioned. However, as the light scattering loss of the copolymers varies depending on the size of the respective polymer blocks, control of the copolymerization is necessary. When applying the equations I and II in the case of copolymers, the calculation is performed with the values allocated to each of the polymers in

proportion to the reciprocal number of the molar volume ($\rho$/M).

Further, even in the case of a polymer which is assumed to be transparent from the chemical structure, the transmitting light is scattered at the boundaries between crystalline layers and non-crystalline layers when the crystallization in the polymer material is not uniform. In this case, the so-called Mie scattering is caused, and the attenuation loss is remarkably increased. Accordingly, finding of optimum condition for the polymerization process to reduce the crystalline fraction of the molecularly designed polymer is necessary.

Stabilizers such as antioxidants, etc., can be added to the polymers. Although there is no special restriction, antioxidants on the basis of hindered phenols, thioethers and/or phosphites are preferable, and the mixing ratio of the antioxidant is preferably at most 5 % by weight. Addition of more than 5 % may cause an increased attenuation loss and therefore is not preferable.

Further, the cladding polymer for the optical transmitting portion of optical transmission systems is required to have a refractive index which is smaller than the refractive index of the core polymer, preferably by at least 1 %.

As for the cladding polymer, olefin group containing polymers containing fluorine, acrylic group containing polymers containing fluorine, and methacrylic group containing polymers containing fluorine are usable, and especially, polytetrafluoroethylene, tetrafluoroethylene-hexafluoropropylene copolymers, tetrafluoroethylene-vinylidene fluoride copolymers, polychlorotrifluoroethylene, polytrifluoroethyl (meth)-acrylates, polytetrafluoropropyl (meth)acrylates and polyoctafluoropentyl (meth)acrylates are preferable. When selecting a polymer having a large refractive index for the core polymer, polymers such as poly 4-methylpentene-1 (TPX), etc., can be used as cladding polymers in addition to the polymer groups containing fluorine.

The reason why the polymers of the present invention have a small attenuation loss is based on the finding that the number of C-H bonds, the number of N-H bonds, and the number of O-H bonds in the repeating units of the polymers relate to $\alpha_V$ (high harmonics absorption loss of molecular vibration), and that the less the number of these combinations in the repeating units of the polymer is, the less the attenuation loss becomes, and accordingly, an optimization of these combinations in the repeating units of the polymer by using the equation I is possible which is derived from the finding described above.

Further, structures including benzene rings which have the effect to increase the rigidity may be introduced into the repeating units of the polymers in order to improve their heat resistance. The equation II is derived similarly from the finding that the benzene ring relates to $\alpha_E$ (electronic transition absorption loss). Accordingly, the attenuation loss can be depressed similarly by optimization of the number of benzene rings in the repeating units of the polymers.

In the following, the invention will be described with reference to preferred embodiments and the accompanying drawings.

Figure 1 is a schematic illustration showing the composition of the optical transmitting system related to the present invention,

Figure 2 is a schematic perspective view to illustrate the structure of a plastic optical fiber according to the present invention,

Figure 3 is a schematic perspective view illustrating the structure of a Y shaped branching path in accordance with the present invention,

Figure 4 is a graph showing the relation between crystallinity and optical transmittance of the polymer (PEEK) of embodiment 1,

Figure 5 is a graph showing the dependence of the initial attenuation loss of the plastic optical fiber of the wavelength in the optical transmitting system of embodiment 1 and comparative examples 1 to 5,

Figure 6 is a graph showing the change of the retention fraction of the optical quantity of the plastic optical fiber in the optical transmitting system depending on the elapsed time in embodiment 1 and the comparative examples 1 to 5,

Figure 7 is a graph illustrating the four factors of the attenuation loss of a plastic optical fiber made from cross-linked PMMA,

and

Figure 8 is a schematic illustration of a control system of the invention for the engine control of an automobile.

The reference numerals have the following significances:

1 light source,

2 optical transmitting portion (plastic optical fiber),
3 optical detecting portion,
4 core,
5 clad,
6 substrate,
7 reference to embodiment 1,
8 reference to comparative example 1,
9 reference to comparative example 2,
10 reference to comparative example 3,
11 reference to comparative example 4,
12 reference to comparative example 5,
17 engine,
18 distributor,
19 plastic optical fiber for transmission,
20 plastic optical fiber for reception,
21 light source and detecting unit,
22 pulse disc,
23 index scale,
24 crank shaft.

The present invention is explained hereinafter with reference to embodiments.

Figure 1 is a schematic illustration of the composition of an optical transmitting system of the present invention. The optical transmitting system is composed of the light source 1, the plastic optical fiber 2 as an optical transmitting portion, and the optical detecting portion 3.

Typical examples for optical members are a plastic optical fiber (Figure 2) and a Y-shaped branching path as an optical branching path of waveguide type (Figure 3).

**(1) Method of evaluation of the optical transmitting system**

The evaluation of the optical transmitting system was performed by comparison of the retention fraction of the optical quantity of the plastic optical fiber (optical transmitting portion), which was a part of the system and was left in a thermostatic chamber at 130 °C for 10,000 hours.

The evaluation method was similar to the following evaluation method for the plastic optical fiber.

**(2) Measurement of attenuation loss of the optical fiber**

The evaluation of the optical transmitting capability was performed by means of the cut-back method, in which the transmitting quantity of light $P_1$ ($n_W$) of a light source wavelength of 400 to 900 nm was measured first for the optical fiber having a length of $L_1$ (m); then, the optical fiber was cut at a length of $L_2$ (m), and the transmitting quantity of light $P_2$ ($n_W$) was measured at the length of $L_2$. Subsequently the attenuation loss was calculated from the difference of $P_1$ and $P_2$. The attenuation loss $\alpha$(dB/m) was given by equation (1):

$$\alpha = [10/(L_1 - L_2)]\log(P_1/P_2) \quad (1),$$

The equation reveals that the less $\alpha$ is, the more superior the optical transmitting capability is.

**(3) Evaluation of the heat resistance of the plastic optical fiber**

The test for evaluation was performed with the plastic optical fiber of a length of 10 m in a thermostatic chamber at 130 °C. The specimen was taken out from the chamber at every 1000 hours till 10,000 hours passed, and the attenuation loss was measured at every 1000 hours by means of the cut-back method described above. The heat resistance was evaluated by comparison of the retention fraction of the optical quantity of each fiber specimen. The retention fraction of the optical quantity K (%) is obtained by means of equation (2),

$$\log K = 2 - (\alpha_1 - \alpha_0)/10 \quad (2),$$

where

$\alpha_0$ (dB/m) is the initial attenuation loss at a light source wavelength of 780 nm, and

$\alpha_1$ (dB/m) is the attenuation loss after heating.

**(4) Braching characteristics of the optical branching path of waveguide type**

A specimen for evaluation was a Y shaped branching optical waveguide path of mounting type having a waveguide path length of 10 cm, a branching angle of 10°, and a waveguide path width of 1 mm. Taking the ratio of the intensity of outgoing light to the intensity of corresponding incident light as an excess loss, the ratio of the intensities of the outgoing lights was regarded as the characteristic of branching.

**(5) Evaluation of heat resistance of Y shaped branching optical waveguide path**

A test of heat resistance was performed on an evaluation specimen of the Y shaped branching optical waveguide path of mounting type having a waveguide path length of 10 cm, a branching angle of 10°, and a waveguide path width of 1 mm with a thermostatic chamber at 130 °C. The excess loss and change of branching characteristics of the specimen were measured at every 1000 hours till 10,000 hours passed. The heat resistance was evaluated by comparison of the excess loss and the change of branching characteristics of each specimen.

**Embodiment 1: Optical transmitting system comprising amorphous PEEK**

A polyether etherketone (Victrex PEEK, made by ICI) was used. It is a polymer having a repeating unit of the following structure:

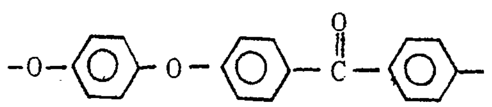
,

where $\rho$ = 1,27 g/cm³, and M = 288 g/mol. Further, as $n_{CH}$ = 12, $n_{NH}$ = O, and $n_{OH}$ = O the value of the left side of equation I which expresses $\alpha_V$ is 4.8 x $10^{-6}$, and as the total number of benzene rings in the repeating unit $n_C$ =3, the number of benzene rings adjacent to carbonyl groups $n_O$ = 2, and the number of benzene rings adjacent to sulfur atom $n_S$ = O, the value of the left side of equation II which expresses $\alpha_E$ is 2.2 x $10^{-2}$. Therefore, the polymer satisfies the fundamental equation of the optical polymer.

Nevertheless, the crystallinity is as large as 48 %, and the polymer cannot be used as it is. Accordingly, a reduction of the crystallinity is necessary.

The relation between the crystallinity of PEEK and the optical transmittance is shown in Figure 4.

Figure 4 shows that the amorphous PEEK has superior transparency as optical polymer. As regards other characteristics, the glass transition temperature is 140 °C, the refractive index ($n_D$) is 1.60, and the density is 1.27 g/cm³. Using the amorphous PEEK as the core material and 2,2,2-trifluoroethyl methacrylate polymer having a refractive index ($n_D$) of 1.418 as the cladding material, a plastic optical fiber having a core diameter of 1 mm and a cladding thickness of 0.1 mm was prepared. The optical window of the fiber (minimum value of attenuation loss) depends on the wavelength (780 nm), and the initial attenuation loss at this wavelength is 0.38 dB/m.

The dependence on the wavelength within the range of 400 to 900 nm is shown as curve 7 in Figure 5.

The optical transmitting system was composed of a semiconductor laser (LD) having an oscillation wavelength of 780 nm as a light source and Si pin-PD as optical detecting portion. The plastic optical fiber of the optical transmitting portion in the optical transmitting system was heated at 130 °C. The retention fraction of the optical quantity of the optical transmitting system after heating for 10,000 hours was 90 %, and the heat resistance was remarkably superior. The change of the retention fraction of the optical quantity versus heating time at 130 °C is shown as curve 7 in Figure 6.

In the following description, reference is made to antioxidants having the following abbreviations and formulae:

(AO- )

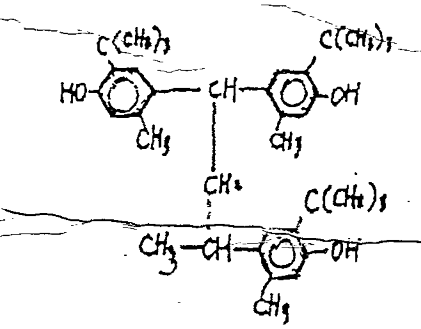

(AO-40)

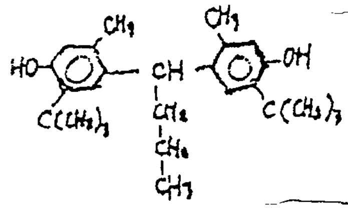

(AO-23)

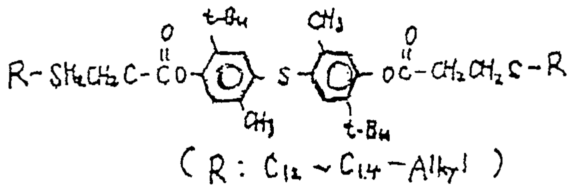

(R : $C_{12}$ ~ $C_{14}$ - Alkyl)

(AO-412S)

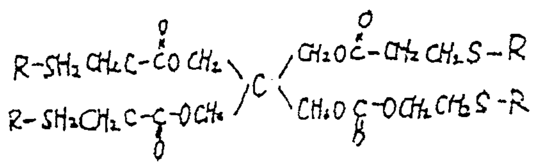

(R : $C_{12}$ - Alkyl)

(PEP-24)

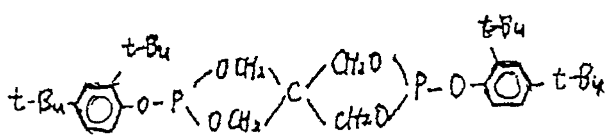

**Comparative example 1:**

**Optical transmitting system comprising an optical transmitting portion containing cross-linked acrylic polymer groups**

A specimen for the core was prepared by adding 0.2 g of benzoyl peroxide as polymerization initiator, 0.1 g of each of Mark AO-30, AO-412S, and PEP-24 (made by Adeca. Argus Kagaku) as antioxidants to a mixture of monomers comprising 85 g of thoroughly purified methyl methacrylate and 15 g of ethylene glycol dimethacrylate. The prepared specimen for the core was poured into a tube having an outer diameter of 1.5 mm, an inner diameter of 0.9 mm, and a length of 30 m which was manufactured by using 4-fluoroethylene-6-fluoropropylene copolymer (FEP) as clad (thickness 0.3 mm), and subsequently one end was sealed. Next, a plastic optical fiber was prepared by heating and polymerization of the monomers for the core with passing the tube through an oil bath at 90 °C gradually from the end which was sealed at a moving velocity of 25 cm/min, and winding.

The left side value of equation I which expresses $\alpha_V$ of the plastic optical fiber is 8.7 x $10^{-6}$, and the left side value of equation II which expresses $\alpha_E$ is zero. Therefore, the fundamental equations of the optical polymer are not satisfied. Further, the glass transition temperature of the core was as low as 110 °C. The optical window of the fiber (minimum value of attenuation loss) was at a wavelength of 660 nm, and the initial attenuation loss was 0.8 dB/m, and the initial attenuation loss at a wavelength of 780 nm was 1.21 dB/m. The dependence on the wavelength within the range of 400 to 900 nm is shown as curve 8 in Figure 5.

Using the plastic optical fiber as an optical transmitting portion, the same optical transmitting system as in embodiment 1 was composed and heated at 130 °C. The fiber kept its shape and was capable to transmit light even at 130 °C which was higher than the glass transition temperature because the core was

of a cross-linked structure, and the retention fraction of the optical quantity after 10,000 hours at 130 °C was 60 % as shown as curve 8 in Figure 6.

Comparative example 2:

**Optical transmitting system comprising an optical transmitting portion containing PC groups**

A bisphenol A type polycarbonate pellet, which was dried at 120 °C for 8 hours, was added with 0.1 % by weight of each of Mark AO-40, AO-412S, and PEP-8 as antioxidants, supplied to the inlet of a hopper under deoxygenated atmosphere, melted in a vent type extruder which was set to have a temperature of the melting portion of 260 °C, a temperature of the vent portion of 270 °C, a vacuum of 10 mmHg, and a temperature of the tip of 240 °C, and further supplied to a core-clad two-components composite spinning head at 220 °C by means of a gear pump at 230 °C, as the polymer for the core. While 2,2,2-trifluoroethyl methacrylate polymer having a refractive index ($n_D$) of 1.418 was supplied to the core-clad two-components composite spinning head as a clad-material, the fused polymer was extruded through the spinneret at 220 °C, cooled, solidified, and wound, and consequently, a plastic optical fiber having a core diameter of 1 mm and a clad thickness of 0.1 mm was obtained.

For the PC of the core of the plastic optical fiber, $\rho$ = 1.20 g/cm$^3$ and M = 254 g/mol. And as $n_{CH}$ = 14, $n_{NH}$ = O, and $n_{OH}$ = O, the left side value of equation I is 6.0 x $10^{-6}$, and as $n_C$ = 2 $n_O$ = O, and $n_S$ = $_O$, the left side value of equation II is 9.4 x $10^{-3}$. Therefore, the fundamental equations of the optical polymer are not satisfied.

The glass transition temperature of the core was 150 °C. The initial attenuation loss at a wavelength of 780 nm was 0.96 dB/m. The dependence on the wavelength within the range of 400 to 900 nm is shown as curve 9 in Figure 5.

Using the plastic optical fiber for the optical transmitting portion, the same optical transmitting system as in embodiment 1 was composed and heated at 130 °C. The retention fraction of the optical quantity after heating at 130 °C for 10,000 hours was 30 % as shown as curve 9 in Figure 6.

Comparative example 3:

**Optical transmitting system comprising an optical transmitting portion containing PSF groups**

A polysulfone (Udel PSF, made by UCC) pellet, which was dried at 120 °C for 8 hours, was added with 0.1 % by weight of each of Mark AO-30, AO-23, and 2112 as antioxidants, supplied to the inlet of a hopper under deoxygenated atmosphere, melted in a vent type extruder which was set to have a temperature of the melting portion of 310 °C, a temperature of the vent portion of 320 °C, a vacuum of 10 mmHg, and a temperature of the tip of 290 °C, and further supplied to a core-clad two-components composite spinning head at 260 °C by a gear pump at 280 °C, as the polymer for the core material. While 2,2,2-trifluoroethyl methacrylate polymer having a refractive index ($n_D$) of 1.418 was supplied to the core-clad two-components composite spinning head as a clad material, the fused polymer was extruded through a spinneret at 260 °C, cooled, solidified, and wound, and consequently a plastic optical fiber having a core diameter of 1 mm and a clad thickness of 0.1 mm was obtained.

For the PC of the core of the plastic optical fiber, $\rho$ = 1.22 g/cm$^3$, and M = 442 g/mol. And as $n_{CH}$ = 22, $n_{NH}$ = O, and $n_{OH}$ = O, the left side value of equation I is 5.5 x $10^{-6}$, and as $n_C$ = 4, $n_O$ = O, and $n_S$ = 2, the left side value of equation II is 2.8 x $10^{-2}$. Therefore, the fundamental equations of the optical polymer are not satisfied.

The initial attenuation loss at a wavelength of 780 nm was as large as 3.8 dB/m. The dependence on the wavelength within the range of 400 to 900 nm is shown as curve 10 in Figure 5.

Using the plastic optical fiber for the optical transmitting portion, the same optical transmitting system as in embodiment 1 was composed and heated at 130 °C. The retention fraction of the optical quantity after heating at 130 °C for 10,000 hours was 40 % as shown as curve 10 in Figure 6.

Comparative example 4:

**Optical transmitting system comprising an optical transmitting portion containing PES groups**

Using polyethersulfone (Victrex PES, made by ICI) as the core material, the PES pellets were dissolved in dichloromethane for purification. The solution was filtered by pressure filtration with a membrane filter

made from polytetrafluoroethylene having a pore diameter of 0.2 µm. A large amount of methanol was added to the filtrate for reprecipitation. After drying under reduced pressure, the obtained purified PES was added with 0.1 % by weight of each of Mark AO-40, AO-4125, and 2112 as antioxidants, supplied to the inlet of a hopper under deoxygenated atmosphere, melted in a vent type extruder which was set to have a temperature of the melting portion of 300 °C, a temperature of the vent portion of 310 °C, a vacuum of 10 mmHg, and a temperature of the tip of 280 °C, and further supplied to the core-clad two-components composite spinning head at 250 °C by means of a gear pump at 270 °C, as the polymer for the core.

While 2,2,2-trifluoroethyl methacrylate polymer having a refractive index ($n_D$) of 1.418 was supplied to the core-clad two-components composite spinning head as a clad material, the fused polymer was extruded through a spinneret at 230 °C, cooled, solidified, and wound, and consequently a plastic optical fiber having a core diameter of 1 mm and a clad thickness of 0.1 mm was obtained.

For the PES of the core of the plastic optical fiber $\rho$ = 1.37 g/cm³ and M = 232 g/mol. And as $n_{CH}$ = 8, $n_{NH}$ = O, and $n_{OH}$ = O, the left side value of equation I is 4.3 x $10^{-6}$, and as $n_C$ = 2, $n_O$ = O, and $n_S$ = 2, the left side value of equation II is 4.7 x $10^{-2}$. Therefore, the fundamental equations of the optical polymer are not satisfied. The crystallinity was almost zero, and thus, it was an amorphous polymer. As regards other characteristics, the glass transition temperature was 225 °C, the refractive index ($n_D$) was 1.65, and the density was 1.37 g/cm³. The initial attenuation loss at a wavelength of 780 nm was as large as 3.2 dB/m. The dependence on the wavelength within the range of 400 to 900 nm is shown as curve 11 in Figure 5.

Using the plastic optical fiber for the optical transmitting portion, the same optical transmitting system as in embodiment 1 was composed and heated at 130 °C. The retention fraction of the optical quantity after heating at 130 °C for 10,000 hours was 50 % as shown as curve 11 in Figure 6.

**Comparative example 5:**

**Optical transmitting system comprising an optical transmitting portion containing amorphous polyarylate (PAr) groups**

An amorphous polyarylate copolymer (U polymer U100, made by Sumitomo Kagaku Kogyo) of the following formula

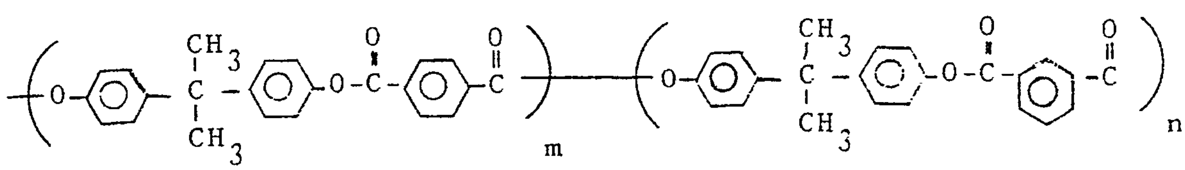

was used as the core material. The PAr pellets were dissolved in dichloromethane for purification. The solution was filtered by pressure filtration with a membrane filter made of polytetrafluoroethylene having a pore diameter of 0.2 µm. A large amount of methanol was added to the filtrate for reprecipitation. After drying under reduced pressure, the obtained purified polymer was added with 0.1 % by weight of each of Mark AO-30, AO-4122, and 2112 respectively as antioxidants, and the mixture was supplied to the inlet of a hopper under deoxygenated atmosphere, melted in a vent type extruder which was set to have a temperature of the melting portion of 320 °C, a temperature of the vent portion of 330 °C, a vacuum of 10 mmHg, and a temperature of the tip of 300 °C, and further supplied to the core-clad two-components composite spinning head at 270 °C by means of a gear pump at 290 °C, as the polymer for the core.

While 2,2,2-trifluoromethyl methacrylate polymer having a refractive index ($n_D$) of 1.418 was supplied to the core-clad two-components composite spinning head as the cladding material, the fused polymer was extruded through a spinneret at 270 °C, cooled, solidified, and wound, and consequently, a plastic optical fiber having a core diameter of 1 mm and a clad thickness of 0.1 mm was obtained.

For the PAr of the core of the plastic optical fiber, $\rho$ = 1.21 g/cm³, and M = 358 g/mol. Further, as $n_{CH}$ = 18, $n_{NH}$ = O, and $n_{OH}$ = O, the value of the left side of equation I is 5.5 x $10^{-6}$, and as $n_C$ = 3, $n_O$ = 2, and $n_S$ = O, the value of the left side of equation II is 1.7 x $10^{-2}$. Therefore, the fundamental equations of the optical polymer are not satisfied. Here, although a benzene ring exists between two carbonyl groups, $n_O$ becomes 2 because the number of each carbonyl group adjacent to the benzene ring is counted as $n_O$. Further, the PAr is an amorphous polymer the crystallinity of which is almost zero. As regards other characteristics, the glass transition temperature was 193 °C, the refractive index ($n_D$) was 1.60, and the

density was 1.21 g/cm$^3$. The initial attenuation loss at a wavelength of 780 nm was 0.60 dB/m, and the dependence on the wavelength within the range of 400 to 900 nm is shown as curve 12 in Figure 5.

The same optical transmitting system was composed of the plastic optical fiber as the optical transmitting portion as in embodiment 1, and heated at 130 °C. The retention fraction of the optical quantity after heating at 130 °C for 10,000 hours was 70 % as shown as curve 12 in Figure 6.

**Embodiment 2: Y shaped branching path**

Using amorphous PEEK as the core material, 0.1 % by weight each of Mark AO-30, AO-412S, and PEP-24 were added respectively as antioxidants, and the core portion was prepared from the polymer by injection molding. The core portion was inserted into a spacer which was made of polytetrafluoroethylene, and 2,2,2-trifluoromethyl methacrylate, the polymer of which had a refractive index ($n_D$) of 1.418, was poured into the spacer, where the core was set, as a monomer for the clad, containing lauroyl peroxide in an amount of 0.3 % by weight, and subsequently, polymerized by heating at 90 °C.

The excess loss of the obtained Y shaped branching optical waveguide path of mounting type was 2.0 dB. The branching characteristics were almost 1:1, and thus preferable. The excess loss after heating at 130 °C for 10,000 hours was 2.6 dB. As the coloration of the clad portion to yellow was remarkable in comparison with the core portion, the increment in the excess loss described above was thought to be caused mainly by thermal deterioration of the clad portion. The branching characteristics were almost 1:1, and thus preferable.

**Embodiment 3: Optical lens**

Using amorphous PEEK as the material, 0.1 % by weight of each of Mark AO-50, AO-412S, and PEP-24 were added respectively as antioxidants, and three kinds of lenses having a lens diameter of 50, 20, and 5 mm, and an F-number of 4, were prepared from the polymer by injection molding.

Dimensional change and coloration to yellow were scarcely observed after heating at 130 °C for 10,000 hours, and no change in the optical characteristics of the lenses was detected.

**Embodiment 4 ~ 13: Optical fibers**

Plastic optical fibers having a core diameter of 1 mm and a clad thickness of 0.1 mm were prepared from polymers, which were added with 0.1 % by weight of each of Mark AO-40, AO-412S, and 2112 respectively as antioxidants and were used as the core material, by the same method as in embodiment 1.

In the following table, the structural formula of the repeating units of the polymers, the initial attenuation loss at a wavelength of 780 nm, and the retention fraction of the optical quantity of the plastic optical fibers after heating at 130 °C for 10,000 hours are shown.

| Embodiment | Repeating unit | Initial attenuation loss (dB/m) | Retention fraction of the optical quantity (%) |
|---|---|---|---|
| 4 | 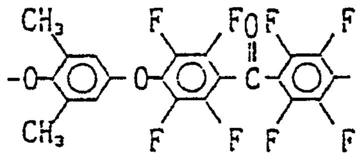 | 0.28 | 95 |
| 5 | 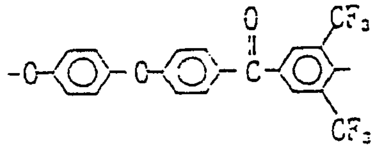 | 0.35 | 92 |
| 6 | 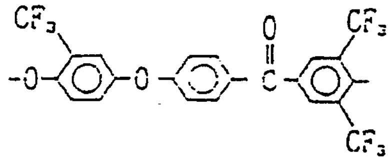 | 0.31 | 93 |
| 7 | 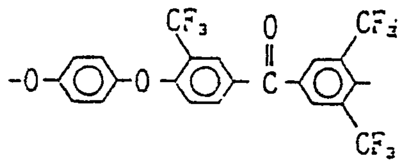 | 0.30 | 93 |
| 8 | 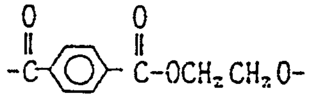 | 0.40 | 90 |
| 9 | 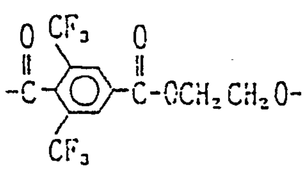 | 0.36 | 92 |

.... continued

| Embodiment | Repeating unit | Initial attenuation loss (dB/m) | Retention fraction of the optical quantity (%) |
|---|---|---|---|
| 10 | 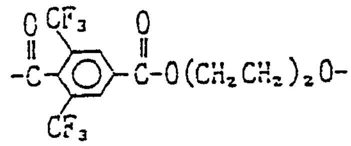 | 0.39 | 95 |
| 11 | 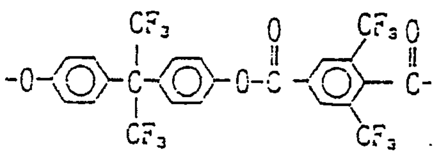 | 0.35 | 92 |
| 12 | 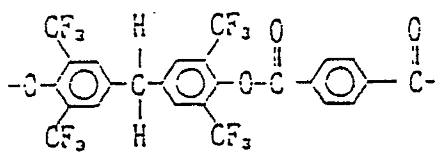 | 0.39 | 93 |
| 13 | 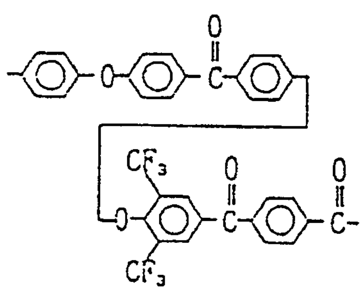 | 0.40 | 90 |

**Embodiment 14: Optical transmitting system for automobile engines**

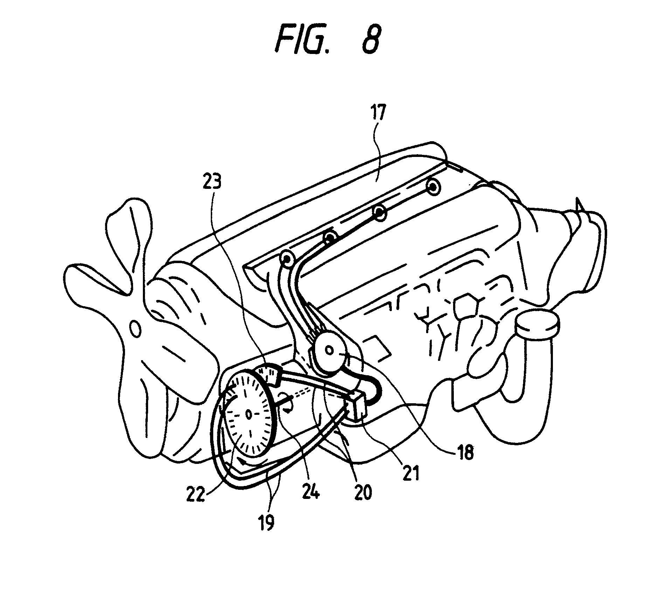

In Figure 8, an example of application of the optical transmitting system of the present invention as a crank angle sensor for automobile engines is shown.

The optical transmitting system is composed of a rotary pulse disc 22 which is fixed to the crank shaft 24 of the engine 17 of the automobile, an index scale 23 which is installed facing the rotary pulse disc 22, and a plastic optical fiber for emission 19 and a plastic optical fiber for reception 20 which are installed in a position facing each other with the members described above therebetween, and a lattice of fan shaped slits is formed on the pulse disc 22 and the index scale 23.

The rotational position (crank angle) of each cylinder of the engine is detected as light pulses by a detecting unit 21, and the optimum ignition timing is calculated by a microcomputer, and subsequently, a distributor 18 or ignition coil is controlled accordingly.

The optical transmitting system of embodiment 1 which was used as the crank angle sensor showed superior heat resistance and preferable characteristics.

The present invention is suited for providing optical transmitting systems having an initial attenuation loss at a wavelength of 780 nm as low as 0.4 dB/m at most, a heat resistant life of at least 10,000 hours in air at 130 °C, and a retention fraction of the optical quantity of at least 90 %.

Further, plastic optical fibers and optical members represented by the optical waveguide path having remarkably superior heat resistance and transparency can be provided.

The invention thus allows to realize optical transmission systems not only for short range optical transmission, but also for transmission over much larger distances than with conventional plastic optical fiber systems, typically by more than 10 times (over distances of more than 100 m), because of the significantly reduced attenuation loss.

The high heat resistance and long-term stability, particularly of the transparency, open numerous applications for the optical transmission systems, particularly e.g. in the field of automotive engineering and in particular for engine control systems.

## Claims

1. Synthetic organic homopolymers and copolymers, particularly in amorphous form, satisfying the equations I and II:

$$(\rho/M)'(9.1 \times 10^{-5} \bullet n_{CH} + 9.1 \times 10^{-4} \bullet n_{NH} + 1.5 \times 10^{-3} \bullet n_{OH}) < 5.3 \times 10^{-6} \quad \text{(I)},$$

wherein are:

$\rho$ the density (g/cm$^3$) of the homopolymer, or, in the case of a copolymer, the density of a corresponding homopolymer consisting of the respective comonomer units,

M the molecular weight of the repeating units (g/mol),

$n_{CH}$ the number of combinations of C-H bonds in the repeating units,

$n_{NH}$ the number of combinations of N-H bonds in the repeating units, and

$n_{OH}$ the number of combinations of O-H bonds in the repeating units,

and

$$(\rho/M)(n_C + n_O + 3 \bullet n_S) < 2.6 \times 10^{-2} \quad \text{(II)},$$

wherein are:

$\rho$ and M the same as above in equation I,

$n_C$ the total number of benzene rings in the repeating units,

$n_O$ the number of benzene rings adjacent to a carbonyl group in the repeating units,

and

$n_S$ the number of benzene rings adjacent to a sulfur atom in the repeating units.

2. The polymers according to claim 1, characterized in that their glass transition temperature (Tg) is equal to or higher than 130 °C.

3. The polymers according to claim 1 and 2, characterized in that they consist of or comprise repeating units of the general formula III,

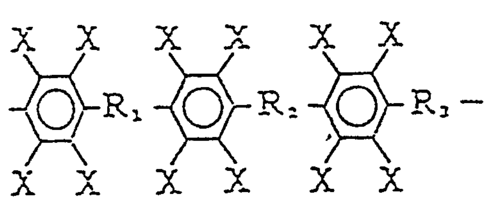

(III),

wherein are:

$R_1$, $R_2$ and $R_3$, independently from each other,

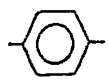 , $-O-$ , 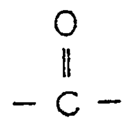 ,

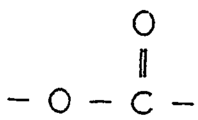 or 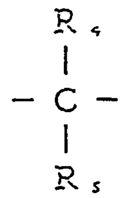 ,

wherein $R_4$ and $R_5$ independently are an eventually halogenated methyl or phenyl group, H or F, and
X H, F or Cl.

4. The polymers according to claims 1 to 3, characterized in that they have a deuterium substitution degree of at most 40 % and/or a fluorine content of less than 40 % by weight.

5. The polymers according to claims 1 to 4, characterized in that they comprise at least one antioxidant, preferably selected from hindered phenols, thioethers, and phosphites, in an amount of at most 5 % by weight.

6. The polymers according to claims 1 to 5, characterized in that they have an attenuation loss of at most 0.4 dB/m at a wavelength of 780 nm.

7. The polymers according to claims 1 to 6, characterized in that they are homopolymers, preferably selected from polyether etherketones (PEEK), polyetherketones (PEK), polyarylates, polyallylates, polyimides, polyethylene terephthalates (PET) and polybutylene terephthalates (PBT), or are copolymers, particularly block copolymers, on the basis of two or more of the respective repeating units, optionally comprising one or two fluorinated groups, preferably trifluoromethyl groups, as benzene ring substituents in the repeating units, and preferably polysulfone-allylate block copolymers or polysulfone-polycarbonate block copolymers, wherein these polymers or repeating groups may comprise silicon-containing groups in the main chain or in side chains.

8. The polymers according to claims 1 to 7, characterized in that they consist of one or more of the following repeating units:

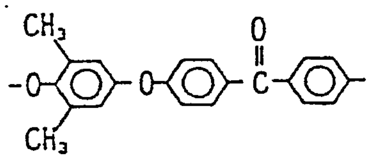 , 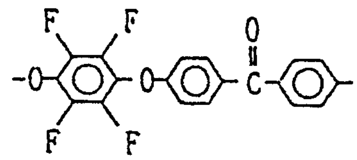 ,

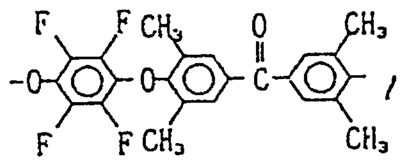 , 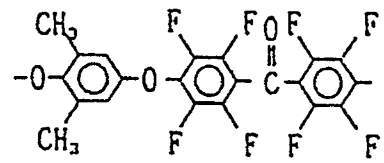 ,

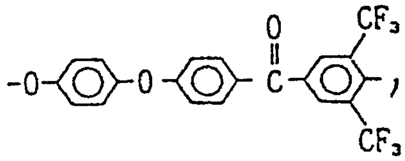 , 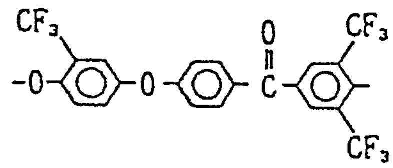 ,

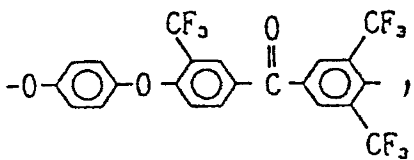 , 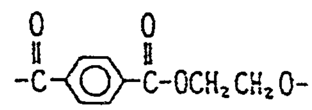 ,

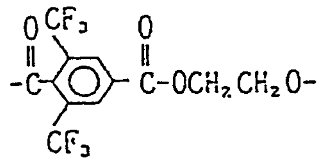 ,

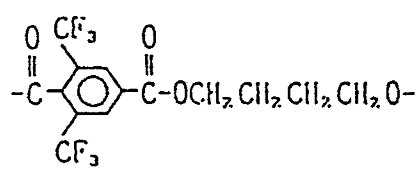 ,

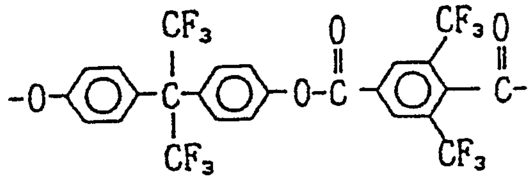

,

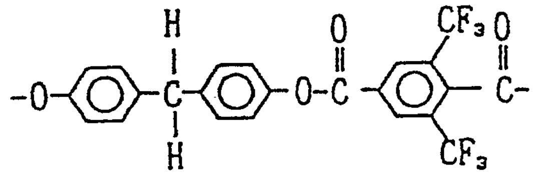

,

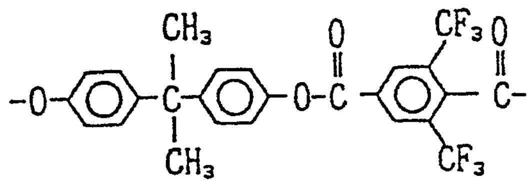

,

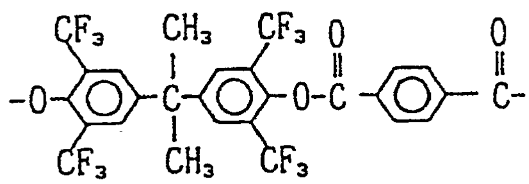

,

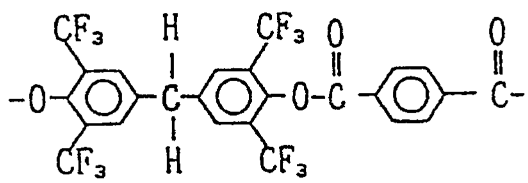

,

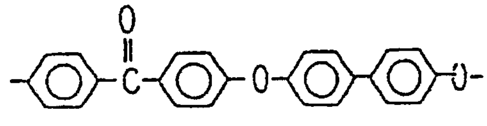

,

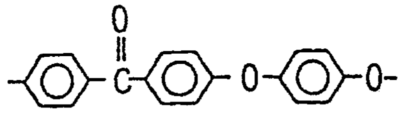 , 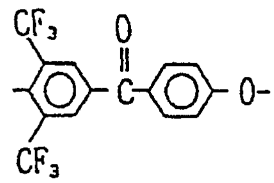 ,

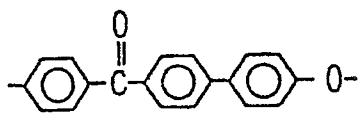 , 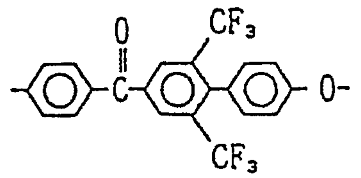 ,

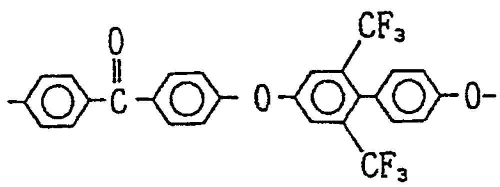 ,

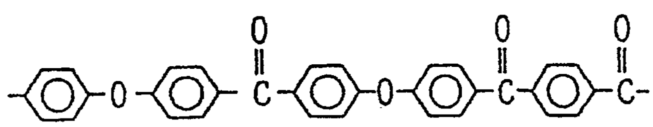 ,

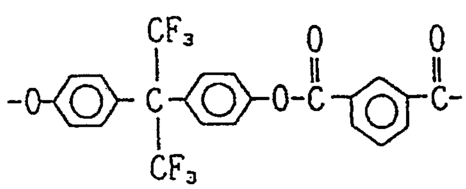 ,

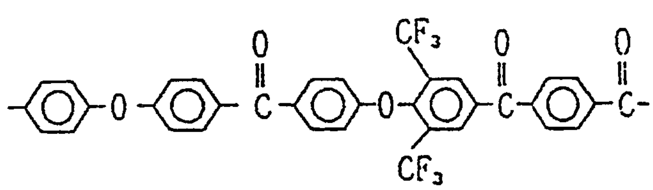 ,

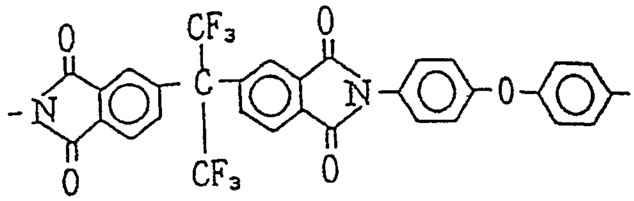
,

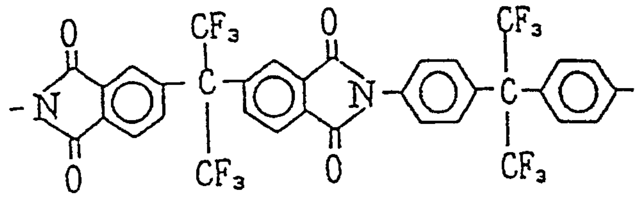
,

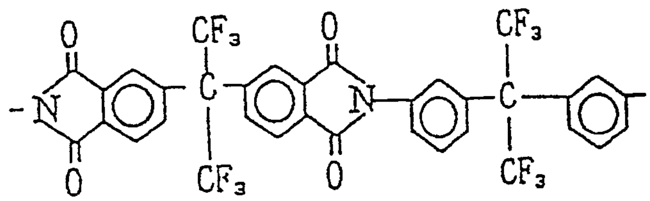
,

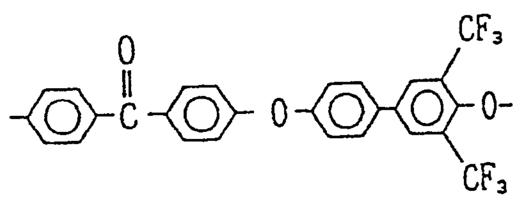
,

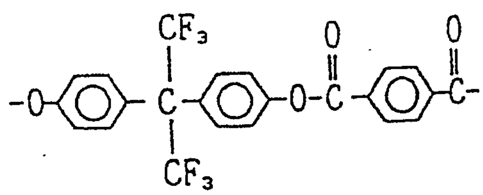
,

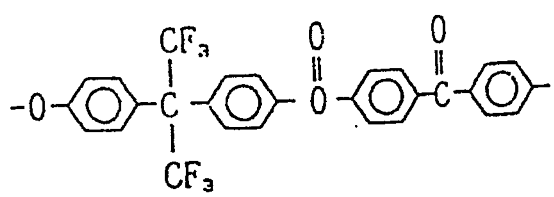
.

9. Optical members, particularly optical lenses, optical fibers or other waveguide structures, consisting of or comprising a polymer according to one of claims 1 to 8.

10. Optical waveguide structures, particularly optical fibers, comprising a core or core portion (4) consisting

of or comprising a polymer according to one of claims 1 to 8, and a clad or clad portion (5) having a refractive index lower than that of the core portion (4), preferably by at least 1 %.

**11.** The optical members and waveguide structures according to claims 9 and 10, the clad or clad portion (5) thereof consisting of or comprising an olefin polymer containing fluorine, an acrylic polymer containing fluorine, or a methacrylic polymer containing fluorine, and especially polytetrafluoroethylene, a tetrafluoroethylenehexafluoropropylene copolymer, a tetrafluoroethylenevinylidene fluoride copolymer, polychlorotrifluoroethylene, polytrifluoroethyl (meth)acrylate, polytetrafluoropropyl (meth)acrylate, polyoctafluoropentyl (meth)acrylate, or poly(4-methylpentene-1) (TPX).

**12.** Optical transmitting system, comprising one or more light sources (1), one or more optical detecting portions (3) and an optical transmitting portion (2) connecting the light source(s) (1) with the optical detecting portion(s) (3), characterized in that the optical transmitting portion (2) consists of or comprises a polymer according to one of claims 1 to 8, or an optical member or an optical waveguide structure according to one of claims 9 to 11.

**13.** Use of the polymers according to claims 1 to 8 and of the optical members and waveguide structures according to claims 9 to 11 and of the optical transmitting system according to claim 12 for unidirectional and bidirectional image, power and information transmission, particularly in optical systems, data processing systems and open-loop and closed-loop control systems, particularly for controlling internal combustion engines and automotive vehicles.

**14.** Control system for internal combustion engines (17), particularly for controlling the ignition timing and/or the fuel metering, particularly the fuel injection amount, and/or the air/fuel ratio by means of a microcomputer, comprising

a pulse disc (22) connected with the crank shaft (24) or a cam shaft of the engine (17),

an index scale (23) installed in a position facing the pulse disc (22),

a light emitting element (19) and a light receiving element (20) installed in a position facing each other with the pulse disc (22) and the index scale (23) therebetween,

wherein the pulse disc (22) and the index scale (23) comprise a plurality of slits, preferably lattice shaped slits, for passing light therethrough, for detecting the crank angle of the engine (17) by detecting the light pulses received by the light receiving element (20) on rotation of the pulse disc (22) in synchronism with that of the engine (17) from the light emitting element (19),

and actuators, particularly for operating ignition coils, fuel metering devices such as carburators or fuel injectors, air and/or fuel bypass valves, exhaust gas recirculation valves, etc.,

wherein the microcomputer operates the actuators,

characterized in that the light emitting element (19) and the light receiving element (20) consist of or comprise a polymer according to one of claims 1 to 8 or an optical member or waveguide structure according to one of claims 9 to 11 or an optical transmitting system according to claim 12.

FIG. 1

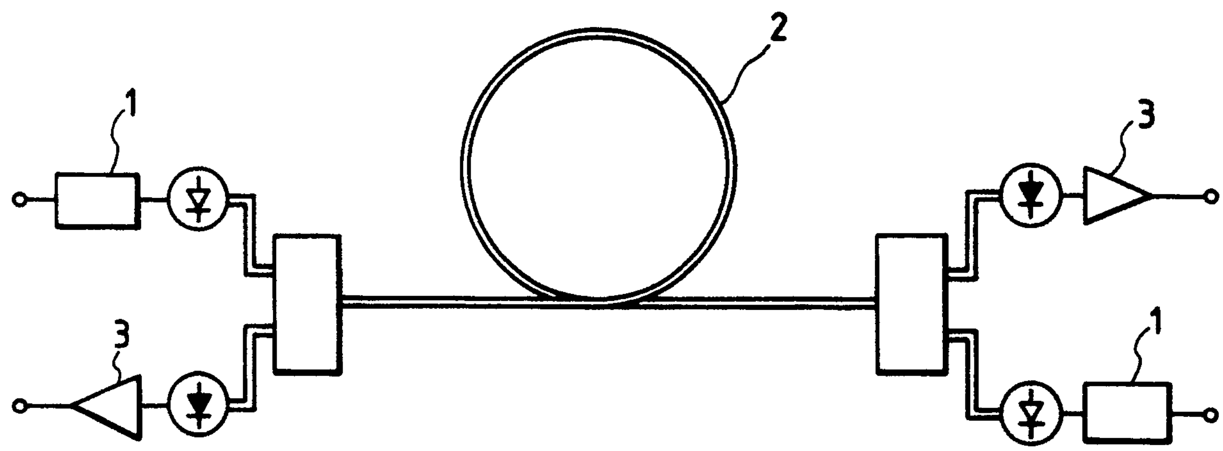


FIG. 2

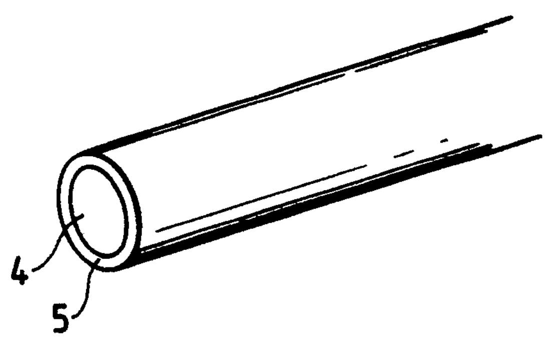

FIG. 3

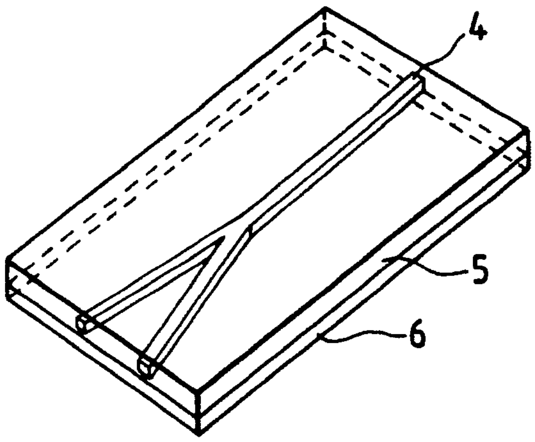
4
5
6

FIG. 4

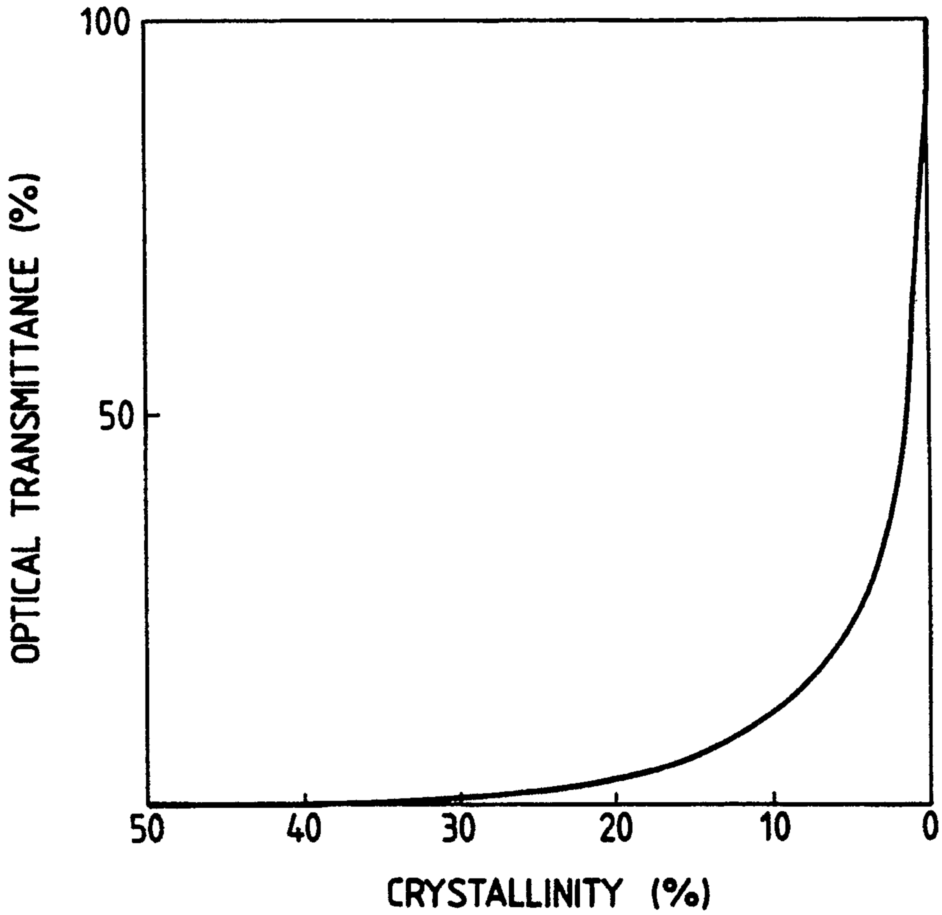
100
50
OPTICAL TRANSMITTANCE (%)
50
40
30
20
10
0
CRYSTALLINITY (%)

FIG. 5

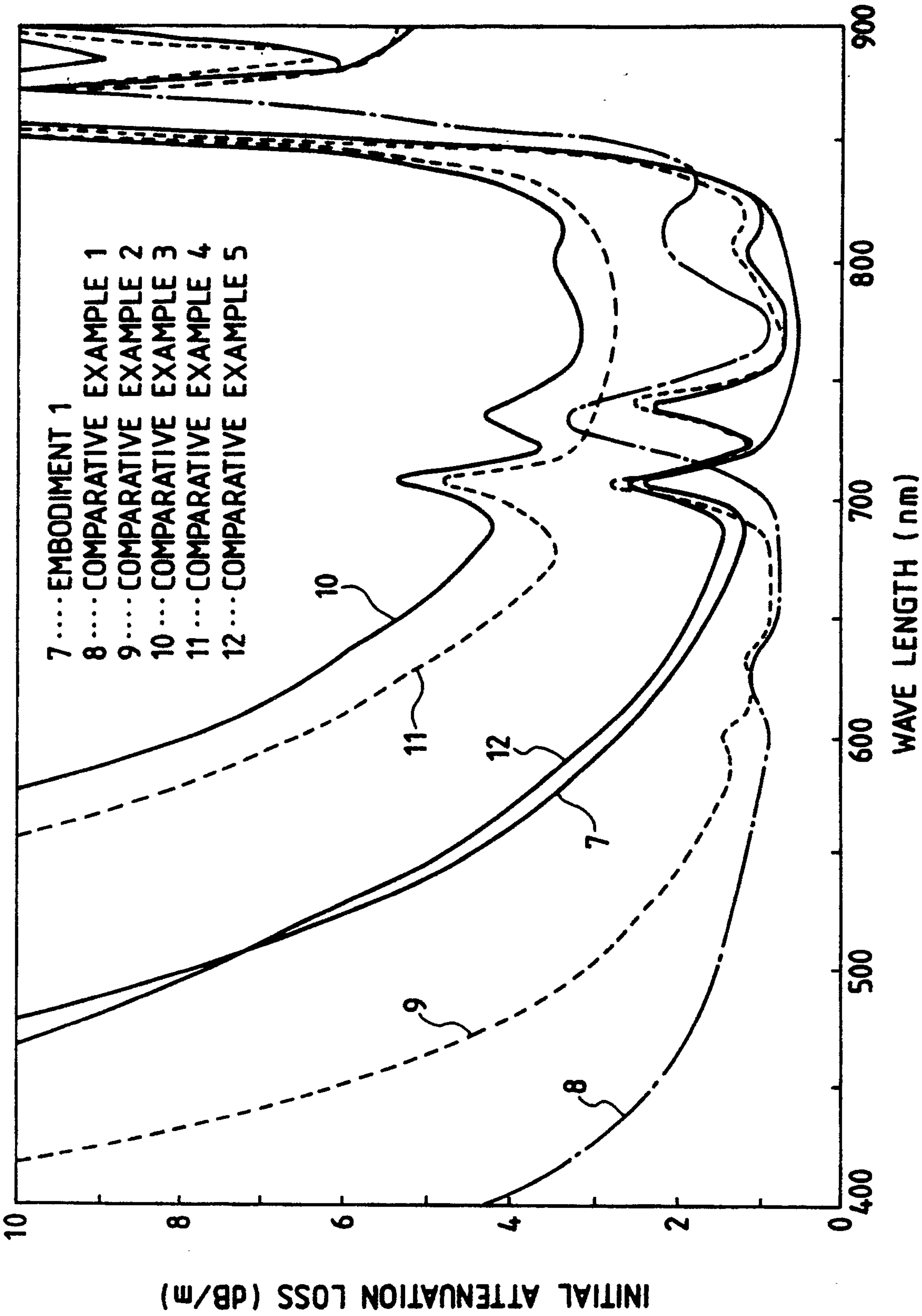
7 ..... EMBODIMENT 1
8 ..... COMPARATIVE EXAMPLE 1
9 ..... COMPARATIVE EXAMPLE 2
10 ..... COMPARATIVE EXAMPLE 3
11 ..... COMPARATIVE EXAMPLE 4
12 ..... COMPARATIVE EXAMPLE 5
10
11
12
7
9
8
INITIAL ATTENUATION LOSS (dB/m)
10
8
6
4
2
0
400
500
600
700
800
900
WAVE LENGTH (nm)

FIG. 6

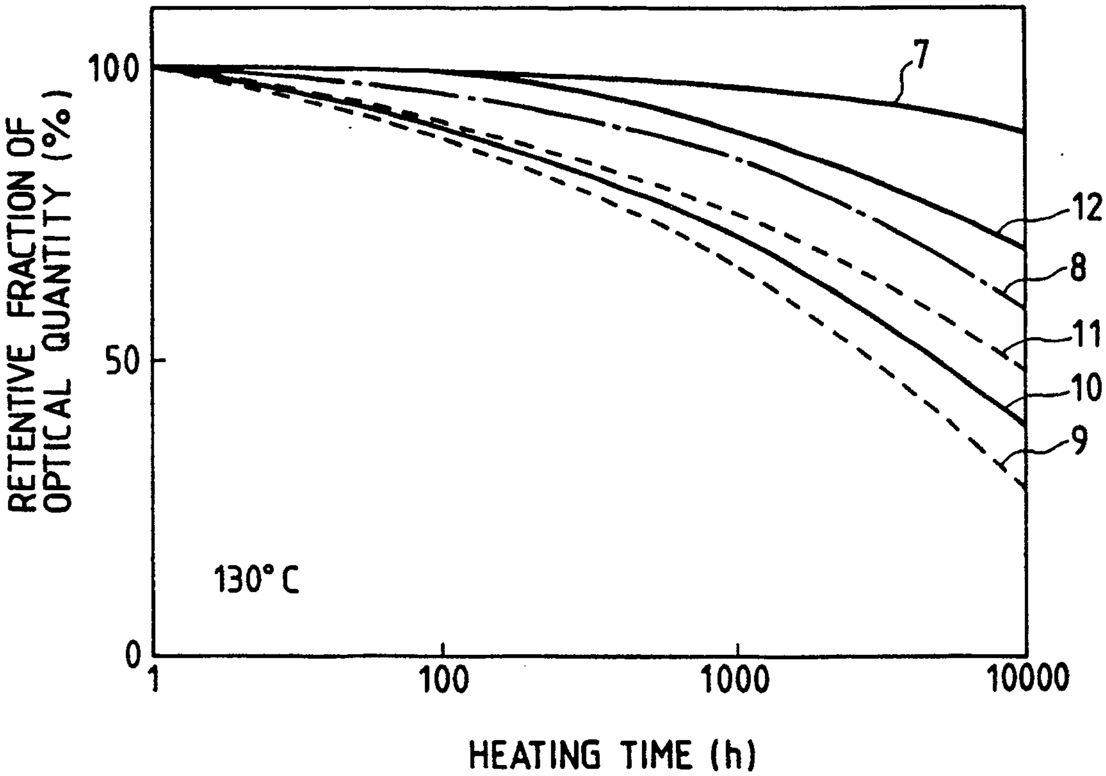

RETENTIVE FRACTION OF OPTICAL QUANTITY (%)
100
50
0
7
12
8
11
10
9
130° C
1
100
1000
10000
HEATING TIME (h)


FIG. 7

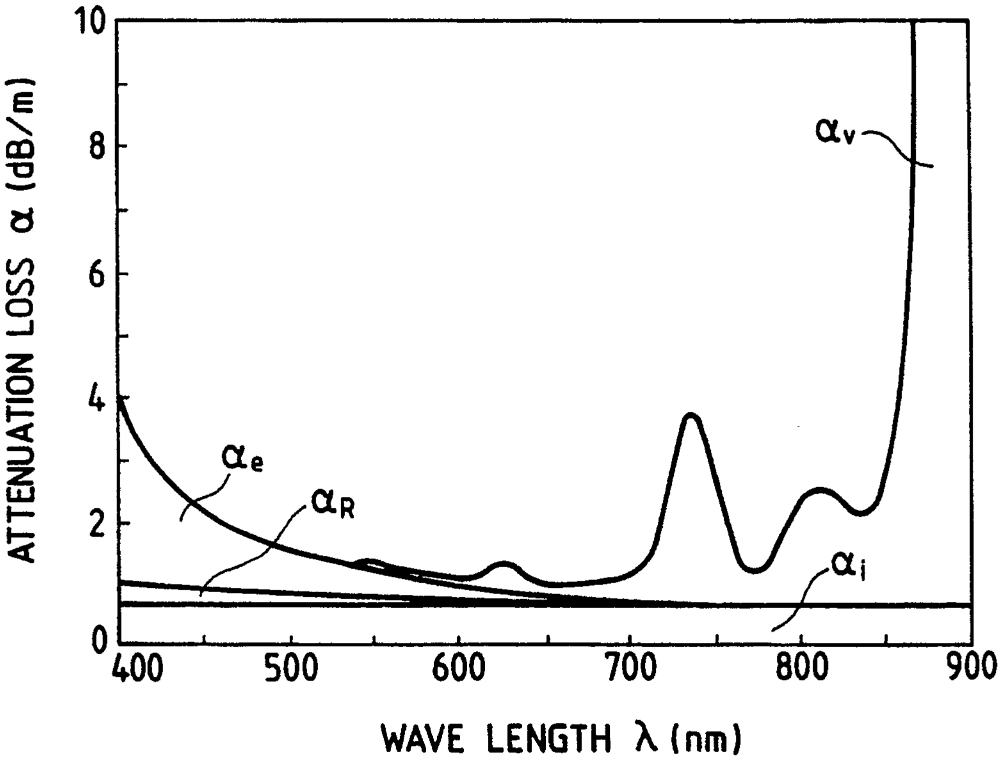

ATTENUATION LOSS α (dB/m)
10
8
6
4
2
0
αv
αe
αR
αi
400
500
600
700
800
900
WAVE LENGTH λ (nm)

FIG. 8